Europäisches Patentamt

European Patent Office

Office européen des brevets

(19)

(11) Publication number: **0 514 774 A1**

# EUROPEAN PATENT APPLICATION

(21) Application number: **92108171.7**

(22) Date of filing: **14.05.92**

(51) Int. Cl.⁵: **B01D 24/30**

(30) Priority: **22.05.91 US 704031**

(43) Date of publication of application:
**25.11.92 Bulletin 92/48**

(84) Designated Contracting States:
**AT BE CH DE FR GB IT LI NL SE**

(71) Applicant: **BAKER-HUGHES INCORPORATED**
**3900 Essex Lane Suite 1200**
**Houston Texas 77027-5115(US)**

(72) Inventor: **Johnson, Bruce Reed**
**2547 Douglas Street**
**Salt Lake City, Utah 84106(US)**
Inventor: **Kubosumi, David K.**
**4619 Ouail Vista Lane Apt. L.**
**Salt Lake City, Utah 84117(US)**

(74) Representative: **Patentanwälte Grünecker,**
**Kinkeldey, Stockmair & Partner**
**Maximilianstrasse 58**
**W-8000 München 22(DE)**

(54) Continuous backwash filter and method of operation.

(57) A particulate media filter employing a continuous media backwash, designed to promote mass or plug flow of the filter media within a filtration vessel and to eliminate areas of stationary media particles. The filter vessel contains a filter bed moving downwardly, countercurrent to an upwardly-moving solids-contaminated influent or feed stream. The contaminated liquid is cleaned by its passage through the filter bed, and is removed as filtrate from a location in the vessel above the top of the filter bed. The downwardly-moving filter bed media becomes progressively more contaminated, and is removed from the filtration stream near the bottom of the filter vessel for cleaning and recycling into the filter stream. A frustoconical skirt-like perimeter feed profile is disposed on the interior of the vessel, surrounding a conical center feed profile, under which may be placed a coaxial center feed pipe. A single, large, substantially unobstructed annular channel for countercurrent flow of influent and filter media is defined between the two profiles. The influent is introduced into the filter vessel between the perimeter feed profile and the wall of the vessel, and under the center feed profile via separate feed distribution channels fed by a common feed header, subsequently entering the filtration stream from underneath the profiles.

FIG. 1

## RELATED APPLICATIONS

This application is related to U.S. Serial No. 07/351,152 filed on May 12, 1989 by Sten Jacquet directed to a Granular Media Filter, and to U.S. Serial No. (Attorney Docket No. M-1528 US) filed on even date herewith by Bruce R. Johnson directed to a System and Method of Decreasing Backwash Fluid in Continuous Backwash Filtration.

## BACKGROUND OF THE INVENTION

Field of the Invention. The present invention relates to separation of solids from liquids in which they are suspended, and particularly to the field of filtration using granular or particulate media as the filter element.

State of the Art. Filtering of liquids has been conducted from time immemorial. Until recently, high-volume filtration of a liquid having solid contaminants suspended therein has only been conducted by passing the contaminated liquid through a stationary filter bed of granular media. In such prior art devices, when the media periodically becomes contaminated to the extent of impermeability, channeling, or unacceptable filtration performance, clean liquid is backwashed through the filter bed to remove the contaminants therefrom, and another filtration cycle is commenced. Such prior art installations require relatively large filter beds if the frequency of the periodic backwashes is to be acceptable, and also typically require two or more discrete filter beds so that continuous filtration (such as is required in high volume industrial and municipal liquid treatment facilities) may be conducted during the backwash cycle of an individual filter bed.

Several decades ago, another type of high volume filter, referred to as a continuous backwash filter, was developed. In such filters, particulate media, such as sand or other suitable particles, is introduced into a vessel as a closely packed "stream" for filtration of solids-contaminated liquid influent. The contaminants are removed from the liquid by the filtration stream, and the liquid filtrate or effluent then exits the vessel. The contaminated media is then cleaned and returned or recycled to the filtration stream. In essence, such an arrangement provides a moving filter bed of media which is continuously being removed from the filtration stream when contaminated, cleaned and reintroduced into the filter cycle. It is known to use such a filtration technique in both downflow and upflow configurations. Downflow configurations introduce the contaminated liquid at the top of the vessel, flowing downward through the filter media. Upflow filters introduce the contaminated liquid at the bottom of the vessel, flowing upward during the filtration process. Examples of downflow filters are the Strata-Sand Filter, offered by Ashbrook-Simon-Hartley of Houston, Texas, and variations of same as disclosed in U.S. Patent No. 4,060,484. Examples of upflow filters are disclosed in South African Patent Application No. 72/8554 and in U.S. Patents No. 4,126,546 and 4,197,201.

It is evident that continuous backwash filters possess certain advantages over stationary bed type filters, including but not limited to simplicity, elimination of backwash cycles, lower cost, smaller physical size, use of a single filtration media, easier adaptability to existing industrial and municipal installations, and more assurance of a consistent, high quality filtrate. One essential element underlying the desirability of continuous backwash filters is the premise that all of the particulate media in the filter vessel is removed from the filtration stream when contaminated, to be cleaned and recycled. A second, related premise is that the entire filter bed remains unblocked or unplugged during the filtration process, so that the solids-contaminated liquid influent is actually passing through substantially the entire available surface area of the filter media and not merely portions of the filter bed. Both of these premises have been found by the inventors herein to be erroneous with respect to the operation of existing continuous backwash filters.

In order for a continuous backwash filter to perform effectively, the filter bed media should move forward in a consolidated manner, in so-called mass or plug flow conditions. In mass flow or plug flow conditions, all of the media particles, while moving substantially together, duplicate or simulate a stationary filter bed insofar as the influent liquid stream is concerned. However, if only a portion of the filter bed moves under plug or mass flow conditions, some of the filter media becomes blocked with contaminants, resulting in the loss of that segment of the effective area of the filter bed. Influent then passes through only the unblocked portion of the filter bed, increasing the loading rate of the filter (gallons per minute of influent per square foot of effective filter area). The increased loading rate not only increases the influent velocity through the unblocked portion of the filter and thus the passage of a higher volume of contaminants through the filter bed without removal from the influent, but also increases head losses, requiring more pumping power to achieve a given filtration rate through the filter.

Volumes or zones of in which stationary particles accumulate, which may also be referred to as "dead zones", may result from excessive solids loading during influent entry into the filter vessel or from the presence or configuration of components inside the filter vessel which obstruct or mask certain areas of the vessel from filter bed movement. As a result, agglomerations of particles in the dead zones remain adjacent the filtration stream instead of being recycled for cleaning and reintroduction to the filtration stream. Such dead zone agglomerations may also grow over time, particularly as the level of contamination increases, and the media particles become more and more mutually adherent. The worst-case end result of the presence of a dead zone may be the phenomenon of bridging, wherein a packed, stationary mass of particles forms a structure extending across the filtration stream between interior elements of the vessel and effectively removes the bridged particles and all those above (in the case of an upflow filter) from the removal, cleaning and recycling process.

Those skilled in the art of filtration methods and devices have, to date, failed to recognize that a continuous backwash filter should be of a design to enhance mass or plug flow of the filter media. Likewise, there has been no recognition in the prior art of the dead zone phenomenon and its detrimental effects on filter performance. Moreover, the configurations and internal designs of prior art filters impair mass flow of filter media and produce multiple countercurrent media/influent flow channels in the filtration stream, thus encouraging the presence of dead zones.

## SUMMARY OF THE INVENTION

In contrast to the prior art, the present invention comprises a continuous backwash filter which provides mass or plug flow of the filter media and eliminates dead zones in the filter vessel.

The present invention includes a substantially vertical filter vessel having an upper, parallel-sided portion and a lower convergent-sided portion. A skirt-like perimeter feed profile lies generally adjacent the boundary between the upper and lower portions, and a center feed profile of triangular cross-section is disposed in the center of the vessel at substantially the same elevation therein as the perimeter feed profile. A parallel-sided center pipe may be disposed coaxially beneath the center-feed profile. Feed conduits or channels, for disposition of the contaminated liquid into the filter vessel, extend from an inlet header to a first outlet located between the perimeter feed profile and the vessel wall, and a second outlet located under the center feed profile. If a center pipe is utilized, the second outlet is preferably disposed under the center pipe beneath the center feed profile. A filtrate or effluent outlet, preferably behind a weir, extends from the upper portion of the vessel, and is positioned above the nominal top of the media filter bed. The filter bed level is determined by the volume of filter media initially placed in the filter vessel. The filter media may be selected for solids filtration capability alone, or may possess absorption or adsorption capabilities if required by the nature of the contaminants in the influent stream.

In the preferred embodiment of the invention, the contaminated media is withdrawn from the filter vessel, cleaned in an external wash tank, and reintroduced above the filter bed to the filter stream in the vessel. It is further preferred that the cleaned media is reintroduced to the filter stream via a hydrocyclone-type centrifugal dewatering unit within the filter vessel, the media transport liquid being thereby substantially removed from the filter vessel without commingling with the upwardly moving filtrate above the filter bed surface. It is also preferred that a portion of the waste flow from the wash tank be employed to power a contaminated media withdrawal eductor at the bottom of the filter vessel, while an additional fraction is recycled to a location proximate the bottom of the filter vessel in order to reduce the volume of waste liquid discharged by the filtration system. This reduction in system waste constitutes a major advantage over prior art filters when disposal methods and options are restricted, as is currently the case in many jurisdictions.

## BRIEF DESCRIPTION OF THE DRAWINGS

FIG. 1 is a partial sectional perspective view of a filter vessel according to the present invention; and

FIG. 2 is a schematic of a filter vessel of the present invention as employed with a preferred flow loop including an external wash tank.

## DESCRIPTION OF THE PREFERRED EMBODIMENTS

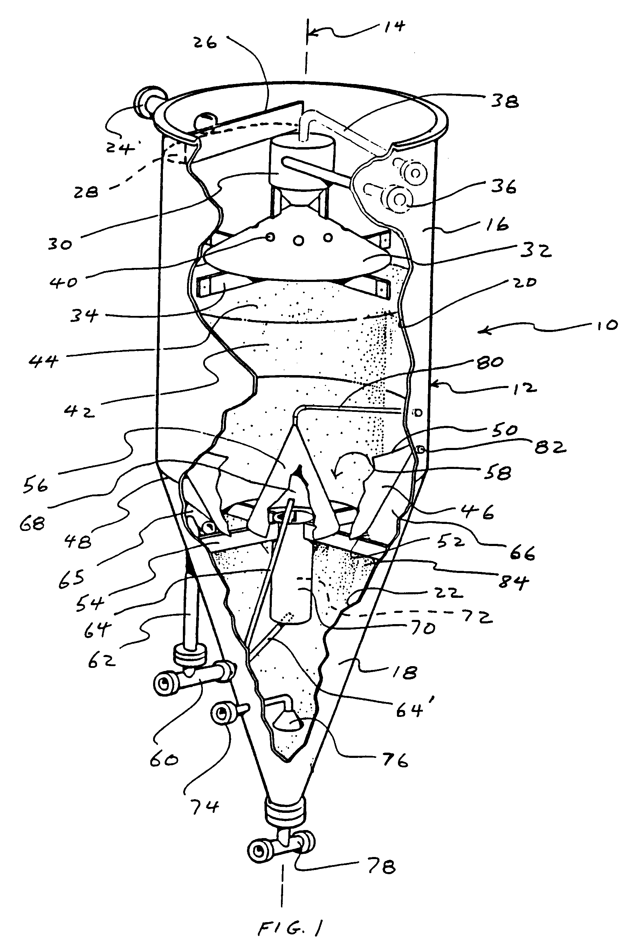

FIG. 1 of the drawings depicts a continuous backwash filter 10 according to the present invention. Filter 10 includes a walled, substantially vertical tank or vessel 12 having a longitudinal axis 14, an upper portion 16 and a contiguous lower portion 18. Upper portion 16 is defined by a wall 20 substantially parallel to the longitudinal axis 14 of the vessel 12, while lower portion 18 is defined by a wall 22 converging downwardly and inwardly toward the vessel axis. In the preferred embodiment, the upper portion 16 is cylindrical, while the lower portion 18 is frustoconical in configuration and sloped at an angle of substantially 25° or less to longitudinal axis 14 of vessel 12. It is most preferred that the slope angle of lower vessel portion 18 be substantially 20° or less, but in instances wherein a 20° cone may cause vessel 12 to be of unacceptable height for a given filter size, a 25° angle will be acceptable. According to theories of bin and hopper design, a slope angle of up to 28° would theoretically provide downward mass flow of filter media in vessel 12, but surprisingly, empirical testing has shown that a slope angle of 25° or less is desirable to assure mass flow. The upper portion of vessel 12 includes a filtrate or effluent outlet 24, disposed through wall 20 behind weir 26 which extends upward from floor 28.

At the center of vessel 12 and generally adjacent to weir 26, hydrocyclone separator 30 is disposed above media spreader cone 32, the assembly being suspended in vessel 12 by supports 34 secured to wall 20. A media feed conduit or channel 36 extends from the exterior of vessel 12 substantially tangentially into the side of separator 30. A media transport fluid return conduit or channel 38 extends from the center of the separator 30 to the exterior of the vessel 12. Media spreader cone 32 includes a plurality of distribution apertures 40 therethrough. The foregoing assembly may generally be termed media feed means for the distribution of clean particulate filter media in vessel 12.

The preferred particulate media for use with the filter 10 of the present invention is silica sand, although other particulate media such as gravel, activated carbon, glass or plastic beads, walnut shells, and other particulates known in the art, as well as others which may be developed in the future, may be employed. The selection of a media is dependent upon the liquid to be filtered, the size and composition of solid contaminants suspended therein, and the degree of filtration desired. It is currently preferred that a silica sand of approximately 1.4mm Effective Size be employed to filter solids-contaminated water, 1.4mm Effective Size being defined as a condition wherein 10% of a given weight of sand passes through a screen or sieve having 1.4mm openings. It is further preferred that the sand have a Uniformity Coefficient of not more than 1.3, the Uniformity Coefficient being the result of dividing the aperture size of a screen or sieve through which 60% of a given weight of sand will pass by the Effective Size. An Effective Size of 1.4mm, and a Uniformity Coefficient of 1.3 indicates that 60% of the sand will pass through a screen with 1.8mm apertures. It should be understood that media parameters will not affect the basic design of filter 10 of the present invention, and are disclosed herein by way of example and not limitation.

Media is distributed by the media feed means to form filter bed 42, the nominal top 44 of which extends laterally below spreader cone 32, and the depth of which extends to or near the bottom of vessel 12.

Below the media feed means, a skirt-like, sloped perimeter feed profile 46 extends substantially around the interior of vessel 12 adjacent or below the boundary 48 between upper and lower portions 16 and 18, respectively, depending upon the size, diameter and configuration of vessel 12. In the illustrated embodiment, the upper edge 50 of profile 46 is in substantial contact with the wall of vessel 12, slightly above boundary 48, and profile 46 converges inwardly and downwardly into lower portion 18 of vessel 12, the lower edge 52 of profile 46 resting on profile supports 54. In the preferred embodiment, perimeter feed profile is frustoconical in configuration and sloped at an angle of substantially 25° or less to the longitudinal axis 14 of the vessel 12.

Center feed profile 56, disposed substantially concentrically with longitudinal axis 14 of vessel 12, rests on profile supports 54 and converges upwardly and inwardly toward axis 14. In the preferred embodiment of the invention, center feed profile 56 is substantially conical in configuration and sloped at an angle of substantially 25° or less to the vessel axis 14.

It is preferred that the slope angle of perimeter feed profile 46 be substantially equal but opposite in direction to that of center feed profile 56, that the height or longitudinal extent of profiles 46 and 56 be substantially equal, and that profiles 46 and 56 be disposed on the same horizontal plane within the vessel 12. Thus, profiles 46 and 56 define a single, large, substantially unobstructed annular channel 58 with a gradually reducing cross section, consistent and equal inner and outer boundary slopes, and entry and exit boundaries defined by planes transverse to the vessel axis, and the flows therein.

Influent feed inlet header 60 receives a solids-contaminated liquid stream, and distributes same into vessel 12 via feed distribution conduits or channels 62 and 64. Channel 62 extends to annulus 66 between perimeter feed profile 46 and the wall of vessel 12. Channel 62 exits into a lateral "tee" 65, which may comprise a pipe tee or a sheet metal baffle extending laterally over the top of the channel exit. It is desirable to extend channel 62 upward into annulus 66 as far as possible to reduce turbulence in the filter bed 42 attributable to influent flow. Distribution channel 64 extends upwardly from header 60 to center feed profile 56. In one preferred embodiment, channel 64 extends at least proximate to and under the bottom of the interior 68 of profile 56. In another preferred embodiment, a tubular center pipe 70 of substantially constant width and of like transverse cross section to that of the lower portion 18 of vessel 12 is disposed below center feed profile 56, and feed distribution channel 64' extends at least proximate to and under the bottom of the interior 72 thereof.

In the latter embodiment, it is preferred that the length of the sand face between the lower edge 52 of perimeter feed profile 46 and wall 22 be substantially equal to the length of the sand face between the lower edge of the center feed profile 56 and center pipe 70, "length" in this instance being taken in diametrical cross section across the interior of vessel 12 and at the normal angle of repose of the filter media in vessel 12.

Model tests have proven that the length and longitudinal placement of the center pipe 70 under the center feed profile 56 affects the size (width) of the filtration stream below and between the perimeter feed profile 46 and the center feed profile 56. If the center pipe 70 does not extend far enough below profile 56, the annular filtration stream or channel narrows in a radial direction, permitting the formation of dead zones. Similarly, if the center pipe 70 extends too far down toward the bottom of vessel 12, the same phenomenon occurs. It has been observed in tests that certain center pipe lengths below the center feed profile and between the undesirable extremes described above, actually enlarge or widen the filtration stream present in the filter bed, eliminating dead zones. However, it has thus far been impossible to develop a mathematical basis for the above observations to permit one to predict or design the optimum or desirable range of center pipe lengths for a given vessel size, shape and internal configuration.

It has also been observed in model tests that flow of influent from annulus 66 into the filtration stream of annular channel 58 from under profile 46 occurs primarily adjacent to the lip or lower edge 52. As a result, if the width of annulus 66 is too great, there is potential for an annular dead zone adjacent wall 22. Accordingly, it is preferred that perimeter profile 46 be sized and placed so that the width of annulus 66 adjacent lower edge 52 does not significantly exceed the width of the annular influent stream entering channel 58.

In general, as alluded to above, it is preferred that the transverse cross sectional shapes of perimeter feed profile 46, center feed profile 56, center pipe 70 and vessel 12 be substantially the same.

Regardless of the profile embodiment employed, it is preferred that the influent flow from feed header 60 be directed under the respective perimeter and center feed profiles in proportion to the surface area of the filter media under the profiles, taken at the angle of repose of the filter media. In other words, the lower edge 52 of the perimeter feed profile 46 generally defines a circle (in a cylindrical vessel configuration), as does the segment of vessel wall 22 where the edge of the filter media sloping outwardly and downwardly from the lower edge 52 of profile 46 contacts the wall.

The difference between the area of the circles, corrected (enlarged) for the angle of repose of the media, equals the surface area of the media under the perimeter profile 46. Likewise, assuming a center pipe 70 is employed, the center feed profile 56 defines one circle, and center pipe 70 a second, smaller circle, the filter media sloping inwardly and downwardly from the lower edge of center profile 56 to the exterior of center pipe 70. The difference in the circle areas, adjusted for the angle of repose of the media, equals the surface area of the media under the center profile 56. Therefore, if (by way of example and not limitation) the perimeter profile media surface area is three times that under the center profile, distribution channel 62 should be provided with a cross-sectional area three times that of distribution channel 64, in order to promote proportional influent flow to the inner and outer boundaries of annulus 58. Of course, the distribution channel cross-sections may be adjusted to accommodate any ratio of media surface areas.

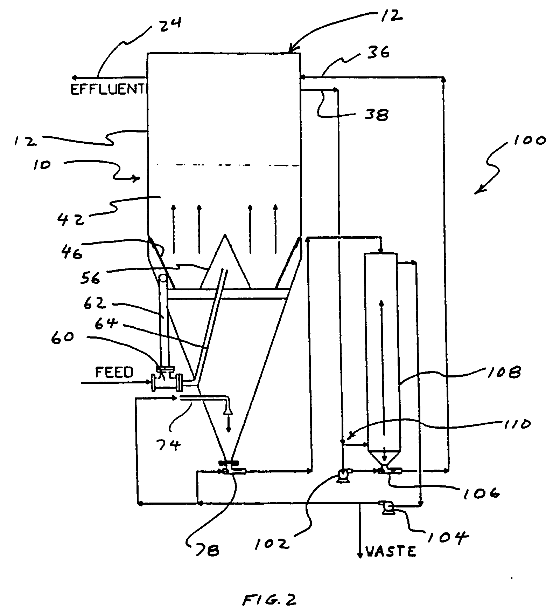

Below center feed profile 56, recycle return inlet 74, having a downward-facing elbow terminating at outlet cone 76, may optionally be deployed in vessel 12. Using recycle return inlet 74, waste liquid from a media washer is recycled into vessel 12, in lieu of influent liquid which would otherwise be drawn out of vessel 12 as the filter media is removed for cleaning. The recycle flow loop will be more fully described with respect to FIG. 2 of the drawings.

A transport device, preferably an eductor 78, is disposed at the bottom of vessel 12 for removal of contaminated or "dirty" media from the vessel.

Vent lines 80 and 82 extend, respectively, from the top of center feed profile 56 and the upper portion of annulus 66 through wall 20 to the exterior of vessel 12. Vent lines 80 and 82 are for removal of air or other gases trapped under profiles 46 and 56 as a result of the influent flow from distribution channels 62 and 64, and are connected to a common vent pipe (not shown) extending at least to a level above the liquid level in vessel 12.

It will be noted that the use of a common influent feed header 60 for feed distribution channels 62 and 64 promotes a self-balancing influent feed. Stated another way, if either channel 62 or 64 encounters a momentary pressure increase resisting the entry of influent into vessel 12, the flow will naturally seek the lower pressure channel, assuring a constant inlet volume until the blockage or other flow restriction is eliminated by downward passage of the filter bed media. Typically, such restrictions would be attributable to an overload of contaminants in a localized portion of the filter bed. Since the filter bed is moving downwardly, such overloads, as "seen" by the channel outlets, are temporary.

No particular materials are required for construction of the filter of the present invention, and it is contemplated that mild steel is suitable for the filter components for most applications. Of course, an interior coating of epoxy paint or other material may be applied to the vessel for abrasion resistance and to provide a smooth, hard surface for the filter media to ride on during the downward passage of the filter bed. Often vessel alternatives, such as fiberglass-reinforced plastic, reinforced concrete, and more exotic metals, such as stainless steel, may be utilized as dictated by the size of the filter and the characteristics (acidic, alkaline, etc.) of the influent liquid.

The operation of the filter 10 will be briefly described with respect to FIG. 1 to enhance the skilled artisan's appreciation of the novelty and unobviousness of the present invention. Filter 10 receives solids-contaminated influent via feed header 60, which distributes same into filter bed 42 via distribution channels 62 and 64, which exit under perimeter feed profile 46 and center feed profile 56. Influent then enters the filtration stream from under the lower edges of feed profiles 46 and 56, excessive influent solids loading being avoided by the diffused nature of the influent entry into the filtration stream along the lower peripheries of the profiles. The influent then proceeds upwardly in vessel 12 through filter bed 42, wherein it is stripped of its contaminants by the massed particulate or granular filter media, exiting the top 44 of filter bed as filtrate or effluent and traveling to effluent outlet 24 over weir 26, which is deployed to minimize the amount of any media exiting the vessel 12. During the filtration process, media inlet channel 36 feeds hydrocyclone separator 30 with clean filter media, the centrifugal effect of the cyclone removing the majority of the media transport liquid from the media, the transport liquid being withdrawn from the vessel 12 via return channel 38 due to suction applied to channel 38 by an external pump. The separated media drops downwardly through an aperture in the bottom of separator 30, the centrifugal spinning effect of the hydrocyclone causing the media to scatter across spreader cone 32, a portion dropping through apertures 40 and the remainder falling from the perimeter of spreader cone 32, down to the top 44 of filter bed 42.

Filter bed 42 moves continuously downward in plug or mass flow through vessel 12 to the bottom thereof, whereat dirty media is continuously removed via eductor 78. As the downward flow of the filter media is through the steeply sloped, single, substantially unobstructed annulus 58 between feed profiles 62 and 64, any potential for media bridging is virtually eliminated. As the filter media passes downward and exits the annulus 58, the perimeter feed profile 46 in combination with the steeply sloped wall 22 of the lower vessel portion (preferably at a slope angle less than or equal to that of the profiles) eliminates dead zones in the area 84 immediately therebelow. At the same time, the presence of center pipe 70 below center feed profile 56 prevents the accumulation of media in another potential dead zone, and displaces the moving media outwardly to promote downward uniform flow to eductor 78, where the most heavily contaminated media is removed from the filter stream for washing.

While it is possible to build a media washing device mounted within the filter vessel, as shown in U.S. Patent No. 4,126,546, it is preferred that an external media washer be employed so that the effectiveness thereof can be more readily monitored and controlled under a variety of flow rates and contaminant densities, and the overall height of the filter vessel reduced.

Referring to FIG. 2 of the drawings, an exemplary and preferred flow loop 100 for use with filter 10 of the present invention is depicted, the flow loop in various embodiments being disclosed and claimed in the above-referenced copending U.S. Patent Application, Serial No. (Attorney Docket No. M-1528 US), the disclosure of which is hereby incorporated herein by this reference. In FIG. 2, elements which have previously been described with respect to FIG. 1 are denoted by the same reference numerals. In addition, other components of flow loop 100 include pump 102, pump 104 and eductor 106, as well as media washer 108. Pumps 102 and 104 may comprise any commercially available centrifugal pumps, and eductors 78 and 106 may comprise any commercially available eductors having suitable abrasion and erosion resistance characteristics to accommodate the presence of filter media in the liquid stream. It should also be noted that an eductor pumping system as used with the present invention is particularly suited and desirable for applications wherein liquid hazardous waste is being filtered, as eductors do not strip volatiles out of the liquid stream, unlike air lift systems commonly employed in the prior art. The pumps and eductors are sized to accommodate the flow rates desired for filter 10, such sizing selection being well within the capabilities of the skilled artisan. Media washer 108 may comprise any suitable prior art device, but it is preferred that washer 108 be of the design disclosed and claimed in the above-referenced copending U.S. Patent Application Serial No. 07/351,152, the disclosure of which is hereby incorporated herein by this reference.

In operation, flow loop 100 accepts influent at feed header 60, injecting same into vessel 12 of filter 10 via distribution channels 62 and 64 to locations under profiles 46 and 56. Thereafter, the influent moves upwardly through filter bed 42, the filter media stripping the influent of soiled contaminants. Upon reaching the top of vessel 12, the filtrate exits via outlet 24. At the same time, clean filter media is entering vessel 12 through channel 36 of the media feed means, as previously described with respect to FIG. 1, and passes downwardly in vessel 12 as moving filter bed 42 to eductor 78. The flow and filtration phenomenon in vessel 12 having previously been described, no further description thereof will be repeated. The dirty filter media exits vessel 12 into eductor 78, recycle return inlet 74 injecting recycled media washer waste liquid into filter bed 42 above eductor 78 to reduce or eliminate influent diversion from filter vessel 12 into the downward flowing media stream. If the pressure at recycle return inlet 74 is equal to or greater than the pressure at the points where the influent stream is introduced into the filter bed 42, none of the influent will flow downwardly to eductor 74. Pressure modulation of the recycle return liquid may be effected by a flow control valve (not shown) placed after the point in flow loop 100 at which the discharge or outlet stream from pump 104 branches to eductor 78 and recycle return inlet 74. The recycle return liquid, plus the motive water required for operation of eductor 78 and the dirty media flows into the top of media washer 108, wherein the media moves downwardly and is cleaned by rotational cocurrent washing action of a liquid wash stream originating at media transport fluid return conduit 38 and withdrawn from vessel 12 via the suction of pumps 102 and 104. As can be seen from FIG. 2, the pump suction is branched at 110, so that only part of the liquid stream from channel 38 enters media washer 108, the remainder entering the suction of pumps 102 and exiting therefrom into eductor 106, at which point the cleaned media is withdrawn from media washer 108 and returned to vessel 12 via channel 36. The wash stream of media washer 108 exits as a waste stream component at the top thereof, along with the recycle return liquid component and the motive liquid component for eductor 78, all being withdrawn therefrom by the suction of pump 104, the resulting discharge or outlet stream from pump 104 being utilized for motive fluid for eductor 78, and for recycle return 74. Excess liquid not required for eductor 78 and recycle return 74 is discharged from loop 100 as waste, as shown at the bottom of FIG. 2. By employing flow loop 100 including recycle return 74, it is anticipated that liquid required for the continuous backwash media cleaning cycle will normally be reduced by fifty percent (50%). It is, of course, possible to utilize a flow loop deleting recycle return 74, such a loop being substantially identical to flow loop 100, with the exception that the output from pump 104 will lead only to eductor 78 and to the waste discharge. Of course, in such case the substantial reduction in liquid requirements of flow loop 100 will not be realized.

While the continuous backwash filter of the present invention has been described in terms of certain preferred embodiments, it is not so limited, and those of ordinary skill in the art will appreciate that numerous additions, deletions and modifications to the disclosed embodiments may be made without departing from the spirit and scope of the invention as hereinafter claimed. For example, the influent feed may be introduced to the feed profiles by a conduit extending down the axis of the vessel, and branched inside the filter. Alternatively, the center feed profile may receive influent via such a conduit, and the perimeter feed profile may receive its influent from another conduit extending from a common header into the side of the vessel adjacent the perimeter profile.

**Claims**

1. A walled vessel for filtration of a contaminated liquid, comprising:
    a volume disposed on a substantially vertical axis and including an upper portion defined by a wall substantially parallel to said axis, and a contiguous lower portion defined by a wall converging downwardly and inwardly toward said axis;
    a perimeter feed profile converging downwardly and inwardly from said vessel wall toward said axis; and
    a center feed profile adjacent said perimeter feed profile and converging upwardly and inwardly toward said axis.

2. The vessel of Claim 1, further including a tubular center pipe defined by a wall substantially parallel to and disposed about said axis and extending downwardly from said center feed profile.

3. The vessel of Claim 1, further including a feed header, a first distribution channel extending therefrom and in flow communication with a location in said vessel exterior to said perimeter feed profile and below the upper extent thereof, and a second distribution channel extending therefrom and in flow communication with the interior of said center feed profile.

4. The vessel of Claim 3, further including a tubular center pipe defined by a wall substantially parallel to and disposed about said axis, extending downwardly from said center feed profile and in communication with the interior thereof, and wherein said second distribution channel is in flow communication with the interior of said tubular center pipe.

5. The vessel of Claim 1, wherein said upper portion of said vessel is substantially cylindrical, said lower portion of said vessel is substantially frustoconical, said perimeter feed profile is substantially frustoconical, and said center feed profile is substantially conical.

6. The vessel of Claim 5, wherein said perimeter feed profile and said center feel profile extend substantially equal vertical distances, and said profiles are disposed about substantially the same portion of said axis.

7. The vessel of Claim 5, wherein said perimeter feed profile and said center feed profile are disposed at substantially the same angle but opposite in direction with respect to said axis.

8. The vessel of Claim 7, wherein the wall of said lower portion of said vessel is disposed at the same or lesser angle to said axis as said profiles.

9. The vessel of Claim 8, wherein said profiles are disposed at an angle of substantially 25° or less to said axis.

10. The vessel of Claim 5, further including a substantially cylindrical tubular pipe disposed below said center feed profile about said axis.

11. The vessel of claim 1, wherein said perimeter feed profile and said center feed profile define substantially annular channel means therebetween.

12. The vessel of claim 11, wherein said annular channel means comprises a single, substantially unobstructed annular channel.

13. An apparatus for filtration of a contaminated liquid, comprising:

a substantially vertically disposed, walled vessel including an upper portion defined by longitudinally extending wall means and a contiguous lower portion defined by longitudinally extending, convergent wall means;

a perimeter feed profile converging downwardly and inwardly from said vessel wall;

a center feed profile adjacent said perimeter feed profile and converging upwardly and inwardly;

a particulate media filter bed disposed in said vessel and extending above said profiles;

influent feed means for introducing said contaminated liquid into said vessel below said profiles;

filtrate withdrawal means for removing liquid from said vessel after passage through said filter bed for transfer of contaminants thereto;

media feed means above said filter bed for distributing clean media to said filter bed; and

media withdrawal means adjacent the bottom of said filter bed for removing contaminated media from said filter bed.

14. The apparatus of Claim 13, wherein said influent feed means comprises a header, a first distribution channel extending therefrom and in flow communication with a location between said perimeter feed profile and said vessel wall, and a second distribution channel extending therefrom and in flow communication with the interior of said center feed profile.

15. The apparatus of Claim 14, further including a tubular center pipe extending below said center feed profile, and wherein said second distribution channel is in flow communication with the interior of said center pipe.

16. The apparatus of Claim 13, wherein said profiles are disposed at substantially the same angle but opposite in direction with respect to said upper portion wall means.

17. The apparatus of Claim 16, wherein said lower portion wall means is disposed at the same or lesser angle to said upper portion wall means as said profiles.

18. The apparatus of Claim 17, wherein said profiles are disposed at an angle of substantially 25° or less to said upper portion wall means.

19. The apparatus of Claim 18, further including a tubular center pipe extending below said center feed profile.

20. The apparatus of Claim 19, wherein said vessel upper portion is substantially cylindrical, said vessel lower portion is substantially frustoconical, said perimeter feed profile is substantially frustoconical, said center feed profile is substantially conical, and said center pipe is substantially cylindrical.

21. The apparatus of Claim 20, wherein said perimeter feed profile and said center feed profile are of substantially the same height, and are substantially vertically coextensive.

22. The apparatus of Claim 13, wherein said media feed means includes a hydrocyclone separator.

23. The apparatus of Claim 22, wherein said media feed means includes a media spreader cone below said hydrocyclone separator.

24. The apparatus of Claim 13, further including recycle return means disposed in the lower portion of said vessel.

25. The apparatus of Claim 24, wherein said recycle return means is disposed below said profiles.

26. The apparatus of Claim 13, wherein said media withdrawal means includes eductor means at the bottom of said filter vessel.

27. The apparatus of claim 13, wherein said perimeter feed profile and said center feed profile define substantially annular channel means therebetween.

28. The apparatus of claim 27, wherein said annular channel means comprises a single, substantially unobstructed annular channel.

29. A method of filtering a contaminated liquid, comprising:

    defining a filtration stream;

    introducing particulate filter media into said filtration stream and moving said filter media downwardly therein under substantially mass flow conditions;

    introducing said contaminated liquid into said filtration stream and flowing said liquid through said filter media in an upward direction;

    removing filtrate from said filtration stream at an elevation above said filter media; and

    removing contaminated filter media from said filtration stream below the elevation of introduction of said contaminated fluid.

30. The method of claim 29, wherein said step of flowing said contaminated liquid through said filter media is conducted, at least in part, through a single, substantially unobstructed annular channel.

31. The method of claim 30, wherein substantially all of said contaminated liquid is flowed upwardly through an annular channel in said filtration stream through which substantially all of said filter media is moved downwardly.

FIG. 1

EP 0 514 774 A1

FIG. 2

11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,,,<br>X | WO-A-9 108 818 (HAKSON) | 1,5-7,<br>11-14,<br>16,21,<br>24-31 | B01D24/30 |
| A | * figure 1 * | 3,4,8,9,<br>17,18,20 | |
| A | FR-A-2 371 955 (REDERIAKTIEBOLAGER NORDSTJERNAN)<br><br>* figure 3 * | 1,3-5,<br>13,14,<br>20,21,<br>23-26,29 | |
| A | DE-A-721 643 (FRITZ  UMLAUF)<br><br>* figures 1,2 * | 1,3,4,<br>11,13,<br>20,<br>23-26,29 | |
| A | FR-A-2 166 378 (MONEM)<br>* figure 1 * | 22 | |

| TECHNICAL FIELDS SEARCHED (Int. Cl.5 ) |
|---|
| B01D<br>C02F<br>B01J |

The present search report has been drawn up for all claims

| Place of search | Date of completion of the search | Examiner |
|---|---|---|
| THE HAGUE | 06 JULY 1992 | DE PAEPE P.F.J. |